# EUROPEAN PATENT SPECIFICATION

(11) **EP 0 291 697 B1**
(45) Date of publication and mention of the grant of the patent: **03.02.1993**
(21) Application number: 88106080.0
(22) Date of filing: 15.04.1988
(51) Int. Cl.: F16D 65/12

(54) **Brake Disk**
Bremsscheibe
Disque de frein

(30) Priority: 21.05.1987 JP 75144/87; 21.12.1987 JP 193761/87
(43) Date of publication of application: 23.11.1988
(73) Proprietor: KABUSHIKI KAISHA YUTAKA GIKEN (also trading as YUTAKA GIKEN CO., LTD.), Hamamatsu-shi, Shizuoka-ken (JP)
(72) Inventor: Izumine, Zenzo, Hamamatsu-shi Shizuoka-ken (JP)
(74) Representative: Schmidt-Evers, Jürgen, Dipl.-Ing.

(56) References cited:
- EP-A- 0 127 932
- DE-A- 3 436 729
- GB-A- 2 157 781

## Description

### DETAILED DESCRIPTION OF THE INVENTION:

### (Field of Industrial Utilization)

This invention relates to a floating type brake disk used in a disk brake for a motor vehicle.

### (Prior Art)

In a floating type brake disk, a braking section and a hub section are each a separate unit and interconnected to each other in such a manner that there may be formed a clearance between the two sections to allow them to move relatively slightly. Arranged as above, this type of a brake disk provides such an advantage that the braking surface of the braking section is free of distortion and the braking action thus remains unchanged because, even when the braking section becomes thermally expanded with frictional heat produced at the time of brake application, its thermal expansion is uniformly distributed thanks to its simple ring shape and because it is not bound by the hub section.

In the prior art, there have been known brake disks of this type including one in which, as disclosed in Published Unexamined Japanese Utility Model Application No. 60-3333, several pairs of semicircular concave are provided on the inner and the outer circumferential surfaces of the flanges of both the braking and the hub sections for their interconnection in such a manner that the paired semicircular concave may face each other and a connecting pin is additionally used for said interconnection, and another in which, as disclosed in Published Unexamined Japanese Utility Model Application No. 61-104842, a connecting pin is inserted in a floating or loose fit manner through holes provided in several mutually overlapping portions of both the braking and the hub sections so as to interconnect them.

### (Problems to Be Solved by the Invention)

In the former of the foregoing two prior art examples, there is generated at the engaging portion of the semicircular concave with the pin a wedge action which results in a large surface pressure so that special consideration should be given with respect to durability of these two sections. In the latter thereof, there arises a problem that such interconnection of the two sections is impractical when the mounting space is very limited because thickness of the interconnected portion is large due to the mutually overlapping portions of the joints.

### (Means for Solving the Problems)

To solve such problems of the prior art as noted in the foregoing, this invention provides a brake disk, wherein a ring-shaped braking section has a plurality of inner joints provided on its inner circumferential surface in such a manner that they may project therefrom, a hub section is provided with outer joints of the same number on its outer circumferential surface in such a manner that they may project therefrom, a connecting hole is provided in an end portion of each joint, and both the inner and outer joints are interconnected by a connecting pin inserted through the connecting holes, characterized in that each of the inner and outer joints is reduced approximately to a half in thickness by cutdown from the side opposite to that of the other and provided with a connecting hole that is varied in its inner diameter, the inner and outer joints being overlapped complementarily with each other, a stepped connecting pin is inserted through the connecting holes, and one of the joints is held between the stepped portion of said pin and a washer of the caulking portion thereof while the other of the joints is resiliently held between said one of the joints and the head portion of said pin.

### (Operation)

Arranged as described in the foregoing, the connecting pin is securely connected with one of the joints by means of the stepped portion thereof and the washer, and a braking torque is transmitted through the connecting pin from a joint of the braking section to that of the hub section. Since the connecting pin is loosely fit in the connecting hole of the joint leaving some gap therebetween, a thermal expansion of the braking section is absorbed therein. However, there is caused no clattering noise when the vehicle is running because both the inner and outer joints are resiliently jointed to each other.

### (Embodiment)

In the following, an embodiment of this invention will be explained with reference to the accompanying drawings.

### BRIEF DESCRIPTION OF THE DRAWINGS

Fig. 1 is a front view of an embodiment of this invention;
Fig. 2 is a sectional view taken along II - II of Fig. 1;
Fig. 3 is a partial front view of a braking section;
Fig. 4 is a partial front view of a hub section;
Fig. 5 is an enlarged view of the portion A in Fig. 2;
Fig. 6 is a sectional view corresponding to Fig. 5 and showing an important portion of another embodiment of this invention;
Fig. 7 is a front view of a portion of another embodiment of this invention;
Fig. 8 is a front view of a portion of braking section of the same embodiment;
Fig. 9 is a front view of a portion of hub section of the same embodiment;
Fig. 10 is a sectional view of important portions thereof; and Fig. 11 is a longitudinal sectional view of a connecting pin.

- 2, 22: Braking section
- 3, 23: Hub section
- 4, 32: Connecting pin
- 7, 10, 14, 28: Joint
- 8, 11, 25, 29: Connecting hole
- 18, 39: Elastic washer

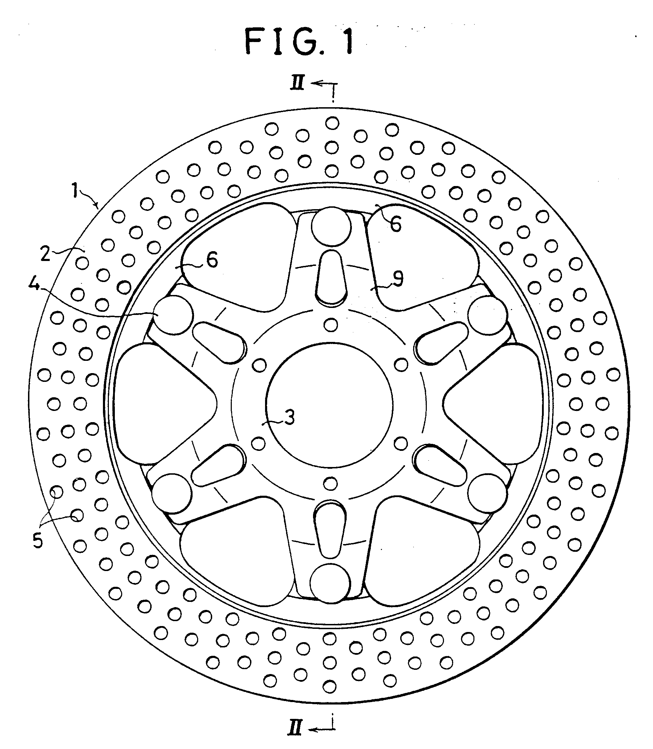

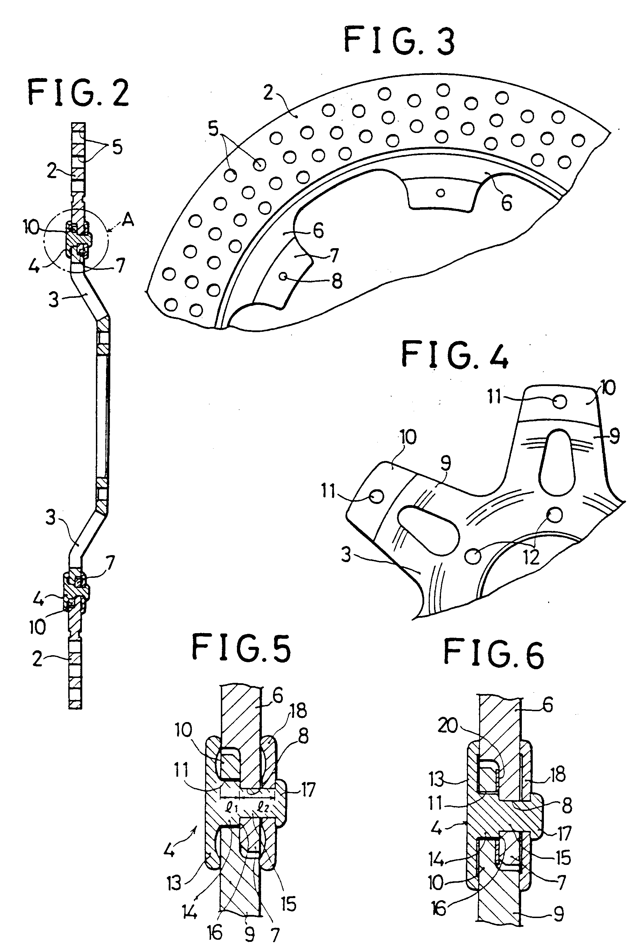

Referring to Figs. 1 and 2, a brake disk 1 comprises a braking section 2, a hub section 3 and a connecting pin 4. As shown in Fig. 3, the braking section 2 is ring-shaped and has a number of vent holes 5 provided therein and several spokes 6 so provided on the inner circumferential surface thereof as to be projecting therefrom, the inner end portion of each of these spokes reduced approximately by half in thickness as compared with the remaining portion thereof so as to make it a joint 7 which is then provided with a connecting hole 8 of a small diameter.

As shown in Fig. 4, the hub section 3 has spokes 9 so provided on its outer circumferential surface as to be projecting therefrom, each of said spokes reduced approximately by half in thickness in the same manner as in the case of the spokes 6 to form a joint 10 similar to the joint 7 and thereafter said joint 10 is provided therein with a connecting hole 11 of a large diameter. Reference numeral 12 denotes a bolt hole provided for connecting the hub to the axle of a motor vehicle.

As shown in Figs. 2 and 5, the braking section and the hub section are connected to each other by having the joints 7, 10 complementarily overlapped with each other and the connecting pin 4 inserted through the connecting holes 8, 11. The connecting pin 4 comprises a dish spring-like head portion 13 having a spring action, and a shaft portion consisting of a large-diameter portion 14, a small-diameter portion 15 and a stepped portion 16, and holds in place an elastic washer 18 by a caulking portion 17 thereof attached to the end of the shaft portion. Length 1₁ of the large-diameter portion is made approximately equal to thickness of the joint 10 while length 1₂ of the small-diameter portion is made such that the joint 10 may be allowed to move slightly in the axial direction when resilience of the elastic washer 18 is applied thereto.

Constructed as described in the foregoing, its connecting pin 4 is held resiliently in the joints 7, 10 by the elastic washer 18 so that both the joints 7, 10 can move in the radial direction for so much as a play provided by the loose fit between the pin 4 and the connecting hole 11 and in the axial direction for so much as permitted by flexions of the elastic washer 18 and the head portion 13. Thus, the pin 4 is resiliently held in the joint 10 so that there will be no noise produced thereby. Additionally, since a braking torque acts as a vertical load at a contact surface between the pin 4 and the connecting hole 8, it can keep the surface pressure to a lower level as compared with that giving a wedge action.

Next, Fig. 6 shows another embodiment of this invention in which both the joints 7 and 10 are allowed to move closer to each other as compared with the foregoing embodiment. In this embodiment, thickness of the joint 10 is made smaller than the length of the large-diameter portion 14 of the pin 4 and there is interposed in a clearance formed thereby between the joints 7, 10 a bent plate spring 20 which can be formed by bending a rectangular piece of plate in an arc form or by twisting the same, this spring 20 thus serving to prevent a floating or too loose a fit of the joint 7 and the pin 4 against the joint 10 and consequently prevent noise that could result otherwise. An elastic washer may be used in place of this spring 20.

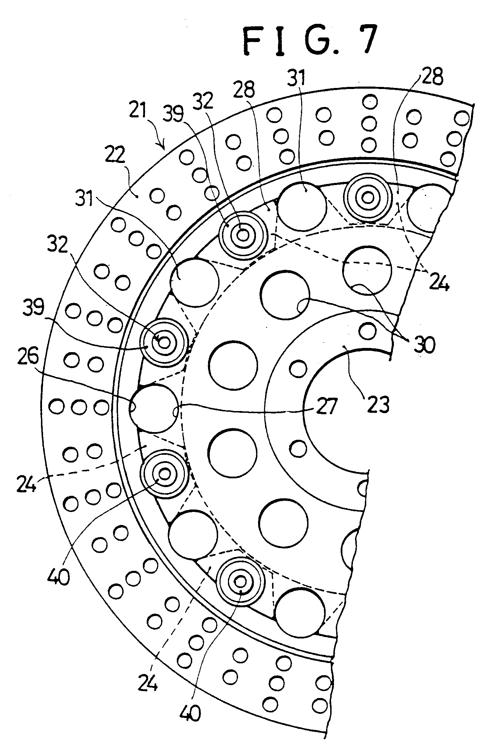

Next, another embodiment of this invention will be explained with reference to Figs. 7 through 11. This brake disk 21 also comprises a braking section 22, a hub section 23 and a connecting pin. The braking section 22 has a plurality of nearly trapezoid joints 24 so provided on the inner circumferential surface thereof as to be projecting therefrom, each of said joints reduced approximately by half in thickness by cutting off its thickness from one side thereof and further provided at its center with a connecting hole of a comparatively large diameter, while there are a plurality of circular arc recessed portions 26 so provided as to abut on the trapezoid joints.

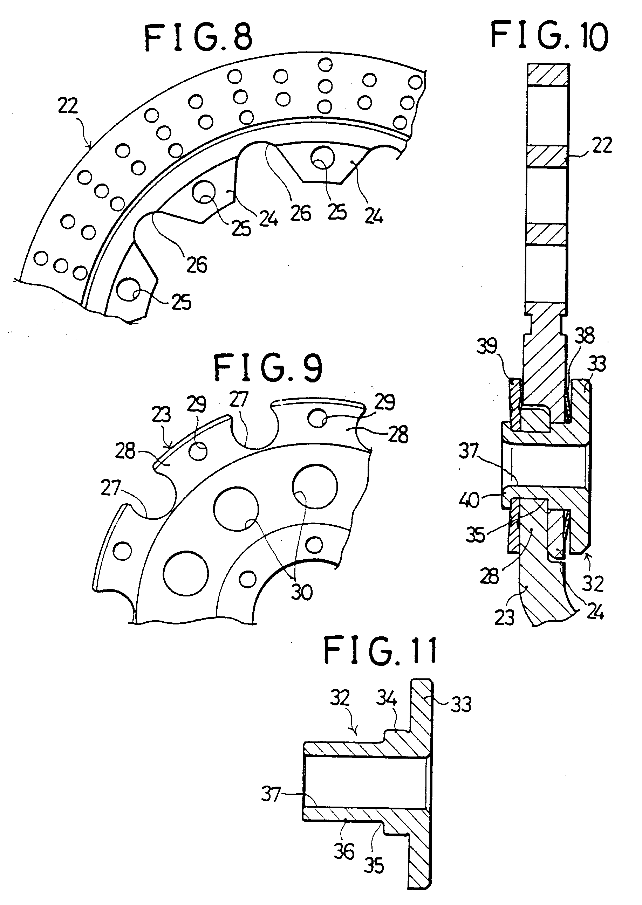

As clearly seen from Fig. 9, the hub section 23 has a plurality of joints 28 so provided on the outer circumferential surface thereof as to be projecting outwards therefrom, each of said joints being separated from the other by a circular arc recessed portion 27 and reduced approximately by half in thickness and further provided with a connecting hole 29 which is smaller than the aforementioned connecting hole 25. The hub section 23 also has decorative holes 30. The recessed portions 27 and 26 both combine to form decorative holes 31.

As shown in Fig. 11, a connecting pin 32 comprises a head portion 33, a large-diameter portion 34, a stepped portion 35 and a small-diameter portion 36 and is provided with a through hole running along its axial center so that it comes in the shape of a hollow rivet.

As shown in Fig. 10, both the joints 24 and 28 are overlapped complementarily with each other, a dish-shaped spring 38 is placed upon the joint 24, the connecting pin is inserted through them, an elastic wahser 39 is fitted therein, and the joint 28 is held on the small-diameter portion 36 by and between the stepped portion 35 and a cualking portion 40. Arranged as described in the foregoing, the joint 24 is held in position at the large-diameter portion 34 by and between the head portion 33 and the other joint 28 through the dish-shaped spring 38.

In the foregoing embodiment, the elastic washer may be substituted by a washer of larger rigidity while the connecting pin may be either solid or hollow.

### (Effect of the Invention)

As described in the foregoing, the braking section and the hub section according to this invention are provided with joints and connected to each other by means of a connecting pin inserted through the joints, each joint made approximately half as thick as the remainder portions of the braking and the hub sections, so that the whole of a brake disk is approximately of the same thickness throughout and made compratively thinner, thus enabling it to be mounted even in a limited space without difficulty. Furthermore, the foregoing connecting pin holds its engagement with the joints by having its stepped portion come in contact with the side of one of the joints, so that it remains held in the right posture free of slanting that can otherwise be caused by loads applied thereto. In addition, surface pressure acting upon the connecting pin and the connecting holes is kept low because it is normal to the surface and causes no wedge action. Further, the connecting pin is resiliently connected with at least one of the joints so that there will be caused no backlash or loosening which can generate a clattering noise.

## Claims

1. A brake disk of the type that a ring-shaped braking section (2) has a plurality of inner joints (7) provided on its inner circumferential surface in such a manner that they may project therefrom, a hub section (3) is provided with outer joints (10) of the same number on its outer circumferential surface in such a manner that they may project therefrom, a connecting hole (8, 11) is provided in an end portion of each joint (7, 10), and both the inner and outer joints (7, 10) are interconnected by a connecting pin (4) inserted through the connecting holes, characterized in that each of the inner and outer joints (7, 10) is reduced approximately to a half in thickness by cutout from the side opposite to that of the other and provided with a connecting hole that is varied in its inner diameter, the inner and outer joints (7, 10) being overlapped complementarily with each other, a stepped connecting pin (4) is inserted through the connecting holes (8, 11) and one of the joints (7) is held between the stepped portion of said pin (4) and a washer (18) of the caulking portion (17) thereof while the other of the joints (10) is resiliently held between said one of the joints (7) and the head portion (13) of said pin (4).

2. A brake disk as claimed in claim 1, characterized in that said washer (18) held in place in the caulking portion (17) of the connecting pin (4) is a dish-shaped spring.

3. A brake disk as claimed in claim 1 or 2, characterized in that a head portion (13) of the connecting pin (4) is formed in the shape of a dish-shaped spring.

4. A brake disk as claimed in any one of claims 1 to 3, characterized in that there is interposed a spring (20) between the inner and outer joints (7, 10).

5. A brake disk as claimed in any one of claims 1 to 4, characterized in that there is interposed a spring (38) between the head portion (33) of the connecting pin (32) and the adjacent joint (24).

6. A brake disk as claimed in any one of claims 1 to 5, characterized in that the connecting pin (32) is hollow.

## Patentansprüche

1. Bremsscheibe, wobei ein ringförmiger Bremsbereich (2) eine Vielzahl von inneren Verbindungsansätzen (7) aufweist, die an deren innerer Umfangsaußenseite in solch einer Weise vorgesehen sind, daß sie daraus herausragen können,
wobei ein Nabenbereich (3) mit äußeren Verbindungsansätzen (10) mit derselben Anzahl auf dessen äußerer Umfangsaußenseite in solch einer Weise vorgesehen ist, daß sie daraus herausragen können,
wobei ein Verbindungsloch (8,11) in einem Endbereich jedes Ansatzes (7,10) vorgesehen ist,
und wobei sowohl die inneren als auch die äußeren Verbindungsansätze (7,10) durch einen Verbindungszapfen (4) miteinander verbunden sind, der in die Verbindungslöcher eingesetzt ist,
**dadurch gekennzeichnet,**
daß jeder dem inneren und äußeren Verbindungsansätze (7,10) ungefähr auf die Hälfte der Dicke durch einen Ausschnitt auf der Seite reduziert wird, die dem anderen Verbindungsansatz gegenüberliegt und mit einem verbindungsloch versehen ist, dessen innerer Durchmesser unterschiedlich ist, daß die inneren und äußeren Verbindungsansätze (7,10) sich gegenseitig überlappen, daß ein abgesetzter Verbindungszapfen (4) in die Verbindungslöcher (8,11) eingesetzt ist und daß einer der Verbindungsansätze (7) zwischen dem abgesetzten Bereich des genannten Zapfens (4) und einer Unterlegscheibe (18) in dessen schwalbenschwanzförmigen Bereich (17) gehalten wird, während der andere der Verbindungsansätze (10) federnd zwischen einem der Verbindungsansätze (7) und dem Kopf (13) des genannten Zapfens (4) gehalten wird.

2. Bremsscheibe nach Anspruch 1, dadurch gekennzeichnet, daß die genannte Unterlegscheibe (18), die im schwalbenschwanzförmigen Bereich (17) des Verbindungszapfens (4) angeordnet ist, eine Tellerfeder ist.

3. Bremsscheibe nach Anspruch 1 oder 2, dadurch gekennzeichnet, daR ein Kopf (13) des Verbindungszapfens (4) die Form einer Tellerfeder aufweist.

4. Bremsscheibe nach einem der Ansprüche 1 bis 3, dadurch gekennzeichnet, daß zwischen den inneren und äußeren Verbindungsansätzen (7,10) eine Feder (20) eingefügt ist.

5. Bremsscheibe nach einem der Ansprüche 1 bis 4, dadurch gekennzeichnet, daß eine Feder (38) zwischen dem Kopf (33) des Verbindungszapfens (32) und dem angrenzenden Verbindungsansatz (24) eingefügt ist.

6. Bremsscheibe nach einem der Ansprüche 1 bis 5, dadurch gekennzeichnet, daß der Verbindungszapfen (32) hohl ist.

## Revendications

1. Disque de frein du type dans lequel une section annulaire de freinage (2) présente une pluralité de jointures intérieures (7) prévues sur sa surface circonférentielle intérieure de manière qu'elles fassent saillie de cette dernière, une section de moyeu (3) est pourvue de jointures extérieures (10) présents en même nombre sur sa surface circonférentielle extérieure de manière qu'elles fassent saillie de cette dernière, un orifice de liaison (8, 11) est ménagé dans une partie d'extrémité de chaque jointure (7, 10), et les jointures intérieures et extérieures (7, 10) sont reliées entre elles par une tige de liaison (4) insérée dans les orifices de liaison, caractérisé en ce que chacune des jointures intérieures et extérieures (7, 10) a une épaisseur réduite à peu près de moitié en réalisant un découpage depuis le côté en face du côté correspondant d'une autre jointure, et est pourvue d'un orifice de liaison dont le diamètre intérieur varie, les jointures intérieures et extérieures (7, 10) étant superposées l'une sur l'autre de manière complémentaire, une tige de liaison étagée (4) est insérée dans les orifices de liaison (8, 11) et l'une desdites jointures (7) est maintenue entre la partie étagée de ladite tige (4) et une rondelle (18) de sa partie de matage (17), tandis que l'autre desdites jointures (10) est maintenue élastiquement entre la précédente desdites jointures (7) et la partie de tête (13) de ladite tige (4).

2. Disque de frein selon la revendication 1, caractérisé en ce ladite rondelle (18) maintenue en place dans la partie de matage (17) de la tige de liaison (4) est un ressort en coupelle.

3. Disque de frein selon la revendication 1 ou 2, caractérisé en ce qu'une partie de tête (13) de la tige de liaison (4) présente la forme d'un ressort en coupelle.

4. Disque de frein selon l'une quelconque des revendications 1 à 3, caractérisé en ce qu'un ressort (20) est interposé entre les jointures intérieures et extérieures (7, 10).

5. Disque de frein selon l'une quelconque des revendications 1 à 4, caractérisé en ce qu'un ressort (38) est interposé entre la partie de tête (33) de la tige de liaison (32) et la jointure (24) adjacente.

6. Disque de frein selon l'une quelconque des revendications 1 à 5, caractérisé en ce que la tige de liaison (32) est creuse.
